# EUROPEAN PATENT APPLICATION

(11) **EP 2 634 009 A2**
(43) Date of publication of application: **04.09.2013**
(21) Application number: 13000611.7
(22) Date of filing: 06.02.2013
(51) Int. Cl.: B42D 1/00, A63H 33/38, B42D 15/00, G09B 17/00

(54) **Sheet assembly for use as an educational tool**

(30) Priority: 01.03.2012 IE 20120107
(71) Applicant: Tobin, Hilary, Tralee, Co. Kerry (IE); Tobin, Debora, Tralee, Co. Kerry (IE)
(72) Inventor: Tobin, Hilary, Tralee, Co. Kerry (IE); Tobin, Debora, Tralee, Co. Kerry (IE)

(57) **Abstract**

This invention relates to a sheet assembly. In particular, the invention relates to a new way of constructing a page to read it differently to a normal page. It is incorporated within an educational book or other format which has a secondary play value as an interactive tool with "educational/instructional" focus. The invention encourages reading, utilising a sheet assembly (1) with an aperture (3) therein. The sheet (1) may have a picture/image/illustration on its surface. This invention allows the person to become the character on a sheet while looking through an aperture (3) and reading a flap (2) facing them which is at the lower part of the sheet. The flap (2) may fold in either direction. The objective of the invention is to make books or other, incorporating the invention, more interactively attractive to children/adults.

## Description

### Field of invention

The present invention relates to a sheet assembly. In particular the invention relates to a new way of constructing a page to read it differently to a normal page.

### Background to the Invention

In this age of computers and gaming it is becoming harder to grab peoples' attention with books and encouraging reading. This invention allows the person to become the character on a sheet while looking through an aperture and reading a fold facing them which is at the lower part of the sheet. Encouraging children to read books and to become familiar with the use of books is a very laudable desideratum. The present invention is aimed at providing a new format for the printed word which is likely to appeal to children and also to adults. Making a book which has a secondary play value as an interactive tool means that there can be two reasons for the item; first for its 'educational/instructional' value, and secondly for its 'play' value as an interactive tool.

### Statement of Invention

The invention provides a teaching aid for encouraging reading comprising a sheet with an aperture therein, sufficient in size and shape to admit the head or face of a user, and with a fold at the base of the sheet, on which words which may be read or spoken aloud are printed.

The sheet may be made from paper, card, plastic or any other suitable material. The sheet may have a picture on its outward surface such that the aperture facilitates the inclusion into said picture of the user's face. The foldable flap may fold in either direction.

The text thereon is presented in such a way that the user is able to read the text while their face is engaged with the sheet aperture. The sheet may have pictures and text on one or both sides.

The invention also provides a book made from a number of sheets as described above. The Sheet can be generally rectangular in shape and A3 or other in size.

The aperture is predominately an oval shape cut out of each sheet but might also be in other shapes. However larger or smaller dimensions can be used, and shapes other than rectangles can be used. Shapes relevant to the characters being portrayed may be included. For example a sheet about fruit might be in the shape of an apple, or about animals might be in the shape of a pig.

The fold out flap at the bottom of the page allows the reader to read the words to be spoken while in the character of the page or story. The words might also be on a corresponding page so the audience can read along.

As an educational aid this invention introduces a new way to read to an audience and capture them differently than to reading from an ordinary page.

It allows the audience to see pronunciation and expressions as they are face to face with the reader. It also allows the reader to interact in a positive amusing way with the audience.

An object of the invention is to make books attractive to children and adults so that they become desirable objects in their own right.

In a preschool setting the device allows the teacher to capture and hold the children's attention while reading to them in an amusing and interactive way. It allows the teacher to be able to see the children and interact with them in a manner which is engaging.

The invention can be incorporated into book format or can be used as single story boards. It can have numerous flaps on a single sheet or a single flap.

The invention can have any type of character for example a cow or a fireman and the flap can have written material pertaining to the characters.

It can be a story or a rhyme or a set of questions on the flap.

The sheet can also be used as a teaching aid for persons who have remedial problems. It allows teachers to watch children's reactions and by becoming the character they are able to connect with children differently.

As a parent it allows story time to become more fun.

For persons who have become disinterested in reading it introduces them to a new and novel way to read.

### Brief Description of the Drawings

### Figure 1

Depicts Blank sheet with fold out flap

### Figure 2

Depicts example of the sheet in an open book

### Figure 3

Depicts example of different shape of book

### Figure 4

Depicts example of different shaped cut-out.

### Figure 5

Depicts examples of different way book can be opened

### Figure 6

Depicts example of book with singular character and multiple pages.

### Detailed Description of the Drawings

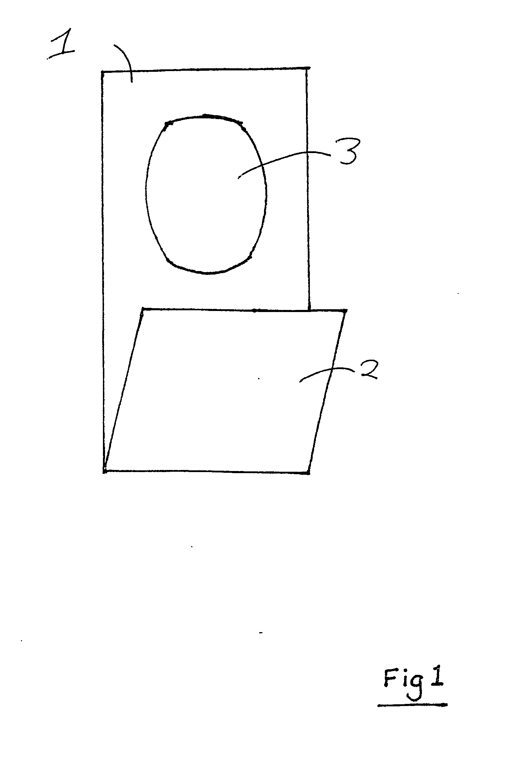

Figure 1 depicts an educational tool sheet comprising a blank sheet (1) with a fold out flap (2) and aperture (3). The sheet (1) is generally rectangular in shape of A3, A4, A5, etc. dimensions, but larger smaller dimensions may be used and any shape other than rectangular may be employed. On this sheet (1) can be a picture of a person, animal or other; with a rhyme, story or any text on the fold out flap (2). A person will place their face through the aperture (3) and read the text off the fold out flap (2).

This aperture (3) is usually an oval shape cut out of each shape, but other shapes may be employed instead. These other shapes would be relevant to the characters being portrayed within the book. The aperture (3) is positioned to enhance the visual impact of the illustration on the open pages. The fold out flap (2) is usually positioned at the bottom of the page, but may be positioned at the top or side edge. This fold out flap may fold in either direction, towards the front face of the page or the rear face of the page. This fold out flap (2) allows the reader to read the words to be spoken while in the character of the page or story. The words could also be on an accompanying sheet for the audience to read along.

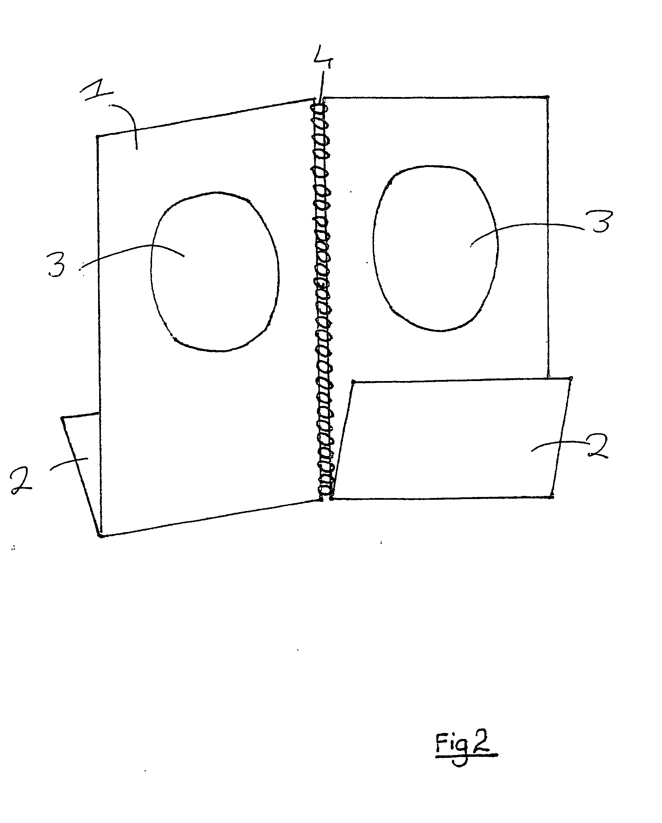

Figure 2 depicts the sheet (1) as part of a bound book system. The book can be bound by any known method, in this example spiral binding (4), and the aperture (3) is propagated through each sheet of the book at the same position in all sheets. A fold out flap (2) can be present on one or many sheets (1) within the book.

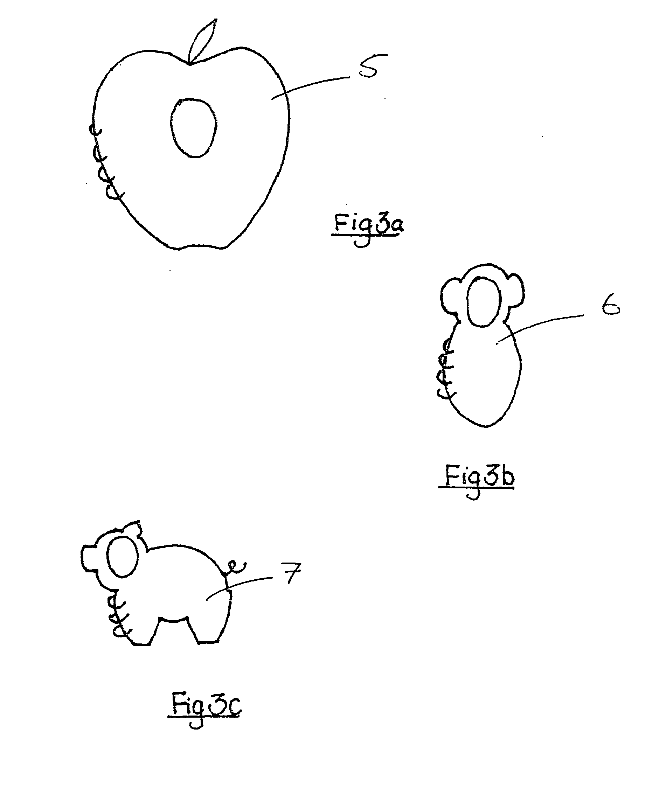

Figure 3 depicts examples of different shapes of book. For example, a book about fruit may be in the shape of an apple (fig 3a), a book about animals in the shape of a bear (fig 3b) or a pig (fig 3c). The aperture (3) used within these books may be oval, but can be other shapes. Large or small dimensions can be used depending on the illustrations used and the visual impact to be achieved.

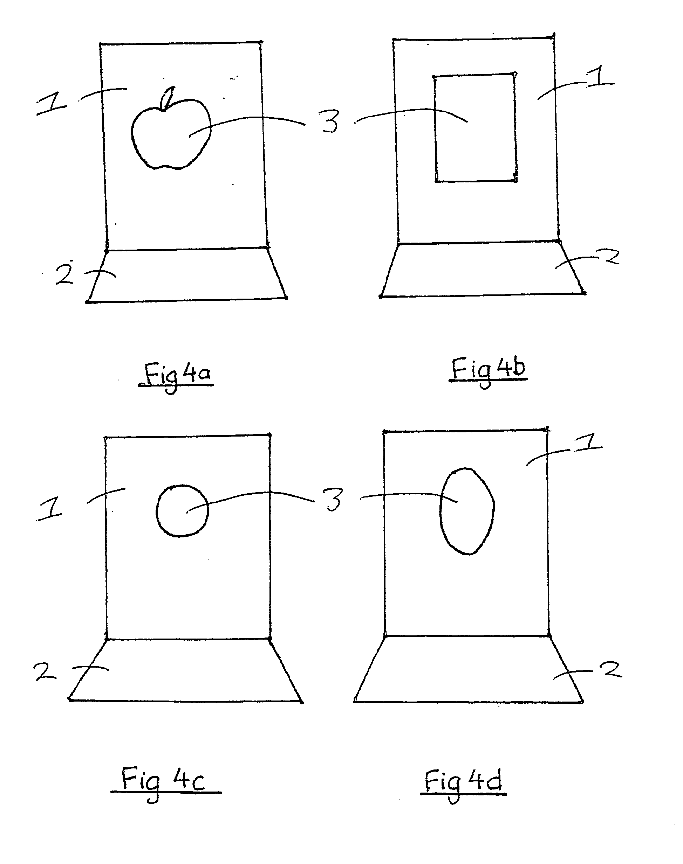

Figure 4 depicts examples of different shaped apertures for a user to place their face through. The aperture (2) is predominantly an oval shape, as shown in figure 4(d), but can be other shapes. Figure 4(b) depicts a rectangular shaped aperture and figure 4(c) depicts a circular shaped aperture. Shapes relevant to the characters being portrayed may be used. A story based on fruit may have an apple shaped aperture as can be seen in figure 4a.

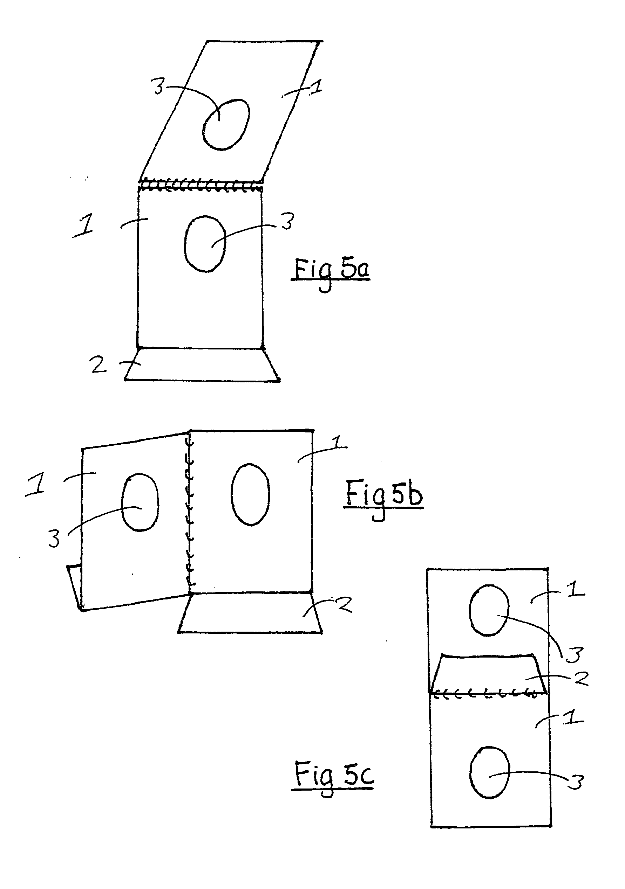

Figure 5 depicts the some of the various ways the sheets (1) with the apertures (3) and fold out flaps (2) can be bound into a book formation. Figure 5a depicts a book which is bound at the top edge and can fold over itself so that the relevant sheet is only portrayed for the optimum effect. A fold out flap (2) will be present on each sheet (1).

Figure 5b depicts a book which is bound at the side edge and folds over itself so that the relevant sheet is only portrayed for the optimum effect. A fold out flap (2) will be present on each sheet (1).

Figure 5c depicts a book which is bound at the bottom edge and folds over itself so that the relevant sheet is only portrayed for the optimum effect. A fold out flap (2) will be present on each sheet (1).

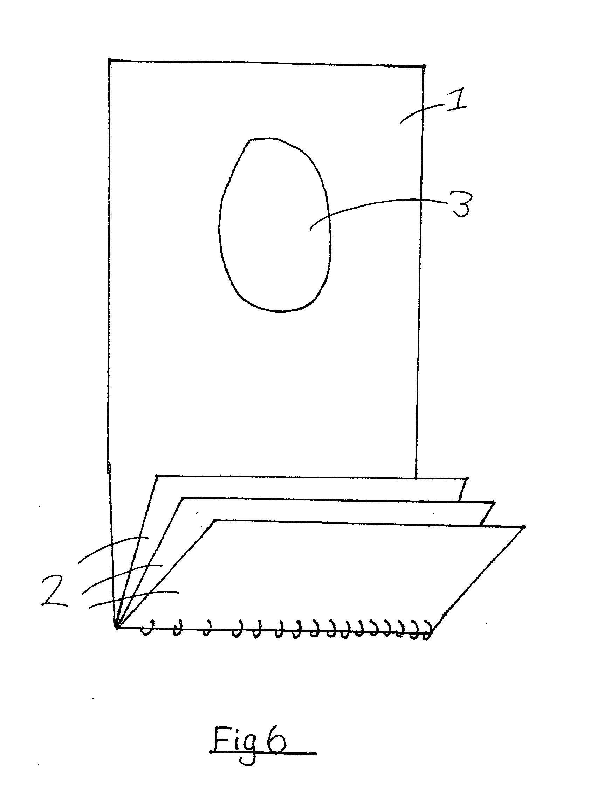

Figure 6 depicts a book with singular character and multiple pages. This is a book with one singular sheet (1), one singular aperture (3) and multiple fold out flaps (2). The singular sheet (1) would be manufactures from reinforced sheet material in this instance. This allows for a single character to tell a whole story.

The invention is not limited to the embodiment herein described, but may be varied in both construction and detail within the terms of the claims.

## Claims

1. An educational tool sheet for use in aiding learning comprising:
a sheet assembly (1) on which illustrations and/or text may be placed,
an aperture (3) within this sheet assembly (1) of sufficient size and shape to allow users to position their face through,
a fold out flap (2) positioned on the sheet assembly (1) folding upwards towards the front face of the sheet assembly to allow the user to interact with it when looking though the aperture.

2. An educational tool sheet for use in aiding learning as claimed in claim 1 wherein
the sheet assembly (1) can be made in any relevant shape or size,
the aperture (3) contained within the sheet assembly can be formed in any relevant shape,
the fold out flap (2) can be positioned on any edge of the sheet assembly and can also fold in a rearward facing direction towards the rear face of the sheet assembly (1).

3. A book comprising multiple educational tool sheets as claimed in the preceding claims bound together at any edge, this binding allowing the pages have the ability to fold over on themselves.

4. A book comprising a single educational tool sheet as claimed in claims 1 or 2 with several fold out flaps (2) positioned on the single sheet assembly(1).

5. An educational tool sheet for use in aiding learning, and book manufactured from the education tool sheets, as substantially hereinbefore described with reference to the accompanying drawings.
